Europäisches Patentamt

European Patent Office

Office européen des brevets

(19)

(11) Veröffentlichungsnummer : **0 037 425**
**B1**

(12) # EUROPÄISCHE PATENTSCHRIFT

(45) Veröffentlichungstag der Patentschrift :
24.08.83

(21) Anmeldenummer : 80902276.7

(22) Anmeldetag : 06.10.80

(86) Internationale Anmeldenummer :
PCT/DE 80/00145

(87) Internationale Veröffentlichungsnummer :
WO WO/81009 (16.04.81 Gazettee 81/09)

(51) Int. Cl.³ : **B 23 B 49/04**

(54) **ABLÄNG- UND ZENTRIERMASCHINE.**

(30) Priorität : 06.10.79 DE 2940659

(43) Veröffentlichungstag der Anmeldung :
14.10.81 Patentblatt 81/41

(45) Bekanntmachung des Hinweises auf die Patenterteilung : 24.08.83 Patentblatt 83/34

(84) Benannte Vertragsstaaten :
AT CH FR GB LI LU NL SE

(56) Entgegenhaltungen :
DE A 2 065 281
DE A 2 640 797
DE B 1 041 855
DE B 1 957 849
FR A 2 358 946
US A 2 966 721
US A 3 400 618

(73) Patentinhaber : **UMA WERKE KARL MÜLLER &
SÖHNE GMBH & CO
Stuttgarter Strasse 100
D-7336 Uhingen (DE)**

(72) Erfinder : **Der Erfinder hat auf seine Nennung
verzichtet**

(74) Vertreter : **Zmyj, Erwin, Dipl.-Ing.
Postfach 95 04 28
D-8000 München 95 (DE)**

## Abläng- und Zentriermaschine

Die Erfindung bezieht sich auf eine Abläng- und Zentriermaschine mit zwei verfahrbaren Spindelstöcken und zwei verfahrbaren Spannstockträgern, von denen jeweils ein Spindelstock und ein Spannstockträger einer Maschinenbettseite bzw. Maschinenbetthälfte zugeordnet ist.

Maschinen dieser Art dienen zur beidseitig gleichen Bearbeitung oder zur beidseitigen unterschiedlichen Bearbeitung von Werkstücken, wobei auch noch die Möglichkeit besteht, daß die Werkstücke auf einer oder beiden Seiten mit mehreren, nicht in einem Werkzeugkopf unterzubringenden Werkzeugen bearbeitet werden können, wobei für den letzteren Fall ein Werkzeugwechsel mittels Revolverkopf erforderlich ist.

Bei einer bekannten Maschine dieser Art (DE-A-20 65 281) ist der Spindelstock und der Spannstockträger einer Maschinenseite jeweils auf dem Maschinenbett als Schlitten verschiebbar geführt, wobei der Spannstockträger mittels einer von Hand betätigbaren Spindel längs des Führungsbettes einstellbar geführt ist, während der Spindelstock durch einen hydraulischen Hubzylinder als Schlitten auf dem Maschinenbett verfahrbar ist, wobei durch den Hydraulikzylinder sowohl die Verschiebung im Eilgang als auch der Vorschub ausgeführt wird. Die beiden Spannstockträger dienen zum Spannen des an beiden Enden zu bearbeitenden Werkstückes und sind einander benachbart, während die Spindelstöcke so auf dem Maschinenbett angeordnet und geführt sind, daß die beiden Spannstockträger zwischen ihnen liegen.

Nachteilig bei dieser bekannten Maschine ist die Tatsache, daß sehr lange Spindeln für das Verfahren der Spannstockträger und weit ausfahrende Hydraulikzylinder für das Verfahren der Spindelstöcke erforderlich sind. Solange die Spannstockträger mit einer von Hand betätigbaren Spindel verstellt werden, ist der Nachteil einer langen Spindel noch vertretbar. Ein rascher Wechsel von einer Werkstückgröße auf eine andere Werkstückgröße, die ein Umrüsten der Maschine erfordert, ist mit einer solchen Machine jedoch nicht durchführbar, so daß eine rationelle Fertigung nicht möglich ist. Die Verwendung einer Kugelrollspindel in Verbindung mit einem Getriebemotor scheitert an der großen Länge der Kugelrollspindel, die für diese Länge einen sehr großen Aufwand nicht nur bezüglich ihrer Herstellung sondern auch hinsichtlich ihrem Schutz gegen Verschmutzung durch Kühlmittel und Späne erfordert.

Aufgabe der Erfindung ist es, eine Abläng- und Zentriermaschine der eingangs erläuterten Art so auszugestalten, daß das Verfahren der Schlitten mit einer einfachen Antriebseinrichtung erfolgen kann, die obendrein in einfacher Weise steuerbar ist.

Diese Aufgabe wird erfindungsgemäß durch die im Anspruch 1 angegebenen Mittel gelöst.

Durch die Kupplung beider Schlitten einer Maschinenseite über eine einzige gemeinsame Antriebseinheit, die dadurch ein Verfahren beider Schlitten ermöglicht, daß jeweils ein Schlitten gegenüber dem Maschinenbett festgeklemmt wird, wird der Einsatz einer verhältnismäßig kurzen Kugelrollspindel und eines in einfacher und exakter Weise steuerbaren Gleichstromgetriebemotors ermöglicht. Die verwendete Kugelrollspindel braucht nun nicht mehr annähernd die Länge des halben Maschinenbettes aufzuweisen, wie dies bei den bisher bekannten Maschinen notwendig war, sondern nur noch diejenige Länge, um die die beiden Schlitten relativ zueinander verfahrbar sind, wodurch diese Spindel sehr kurz gehalten werden kann, da es möglich ist, auch große Entfernungen längs des Maschinenbettes im sogenannten Wechselschritt zu durchfahren, wobei die Schlitten abwechselnd gegenüber dem Maschinenbett festgeklemmt werden.

Es ist dabei möglich, daß der Spindelstock auf dem Spannstockträger verfahrbar ist, wobei letzterer eine Schlittenführung für den Spindelstock aufweist oder beide Schlitten können auf dem Maschinenbett verfahrbar sein, wobei der Spindelstock den Spannstockträger teilweise übergreift. Hierbei ist es zweckmäßig, wenn der Spindelstock mit Stelzen versehen ist, die auf dem Maschinenbett geführt sind, wobei das eine Stelzenpaar den Spannstockträger zwischen sich aufnimmt, der über eine Länge, die dem gegenseitigen Verschiebehub entspricht, verjüngt ist.

Durch Verwendung eines Gleichstromgetriebemotors in Verbindung mit einer Mikroprozessorsteuerung läßt sich jeder Einrichtvorgang ohne Endschalter und Schalternocken durchführen und die beim Arbeitstakt und beim Einrichten der Maschine anfallenden Verfahrwege können schnell überbrückt werden, wodurch die Nebenzeiten beträchtlich verkürzt sind. Die Verwendung eines Gleichstrommotors bringt den Vorteil mit sich, daß die Schlitten trotz ihres großen Gewichtes rasch auf eine hohe Verfahrgeschwindigkeit gebracht und ebenso rasch abgebremst werden können, weil ein Gleichstrommotor über ein hohes Anfahr- und Bremsmoment verfügt. Durch die Verwendung einer Mikroprozessorsteuerung mit geschlossenem Lageregelkreis lassen sich die Verfahrwege vorprogrammieren und exakt einhalten. Durch diese Mikroprozessorsteuerung werden auch die beim Verfahren beider Schlitten notwendigen Klemmvorgänge gesteuert. Ein vorteilhaftes Merkmal der Erfindung besteht auch darin, daß sowohl der Spindelstock als auch der Spannstockträger mit einem gemeinsamen Meßsystem zur Durchführung des Arbeitstaktes auskommen. Die Fahrbefehle an den Spannstockträger oder den Spindelstock werden numerisch vorgegeben und der Rechner der Mikroprozessor-Steuerung berücksichtigt beim Fahren des Spindelstockes oder des Spannstockträgers nicht nur die Richtungslogik sondern addiert oder subtrahiert auch Maße, um beide Schlitten nicht nur an einen bestimmten Ort verfahren zu können, sondern beispielsweise auch das Umschalten vom Eilgang auf Vorschub zu verwirklichen.

Die Erfindung ist in der Zeichnung beispielsweise dargestellt. In dieser zeigen :

Figur 1 eine schematische Darstellung einer ersten Ausführungsform einer Abläng- und Zentriermaschine, von der nur die halbe Maschine dargestellt ist und

Figur 2 eine schematische Darstellung einer zweiten Ausführungsform.

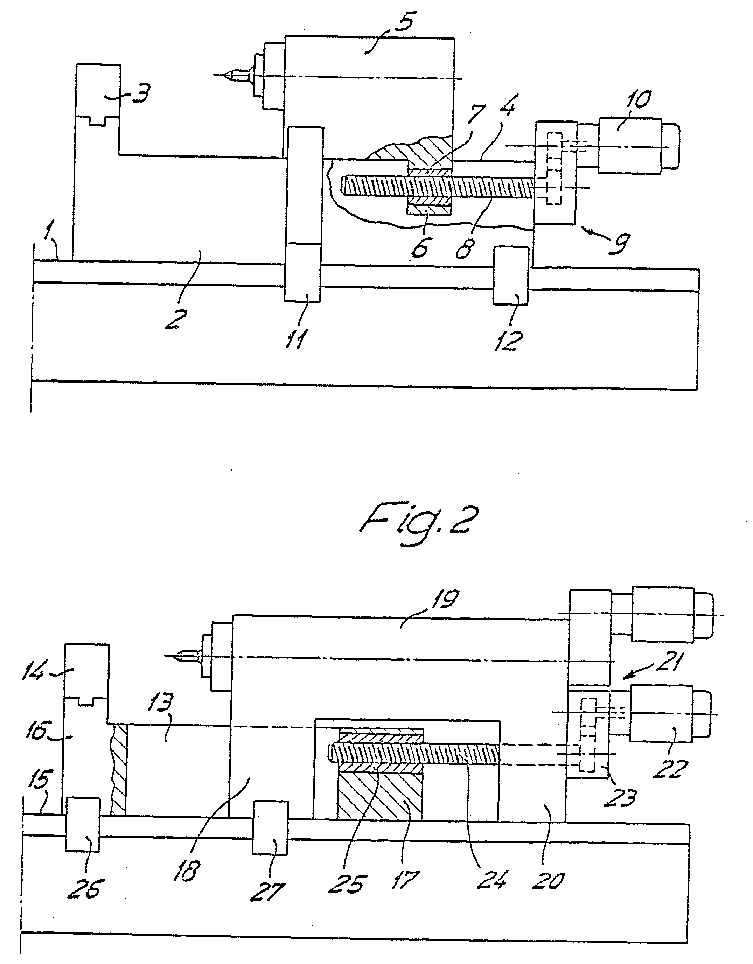

Wie aus Fig. 1 ersichtlich, die nur die Hälfte einer Abläng- und Zentriermaschine zeigt, ist auf einem Maschinenbett 1 ein als Schlitten ausgebildeter Spannstockträger 2 mit Spannstock 3 verschiebbar geführt, der auf seiner Oberseite eine Schlittenführung 4 für einen als Schlitten ausgebildeten Spindelstock 5 aufweist, der gegenüber dem Spannstockträger auf der Schlittenführung 4 verschiebbar ist. Der obere Schlitten, d. h. der Spindelstock weist einen nach unten ragenden Ansatz 6 mit darin angeordneter Mutter 7 auf, mit der eine Kugelrollspindel 8 zusammenwirkt, die von einer Getriebemotoreinheit 9 antreibbar ist, bei der der Elektromotor 10 als Gleichstrommotor ausgeführt ist. Die Getriebemotoreinheit 9 ist mit einem Inkrementalgeber ausgerüstet, um einen Soll-/Ist-Wertvergleich innerhalb eines Wegstreckenmeßsystems durchführen zu können.

Der Spindelstock 5, d. h. der obere Schlitten, ist mit einer Klemmeinrichtung 11 versehen, die mit dem Maschinenbett 1 zusammenwirkt und hydraulisch betätigbar ist. Auf diese Weise ist der Spindelstock 5 gegenüber dem Maschinenbett 1 festklemmbar. Eine ähnliche Klemmvorrichtung 12 ist am unteren Schlitten, dem Spannstockträger 2 vorgesehen, so daß auch dieser hydraulisch gegenüber dem Maschinenbett festklemmbar ist. Das Festklemmen der Schlitten erfolgt wechselseitig. Der jeweils festgeklemmte Schlitten bleibt stehen, während der andere Schlitten durch den Antrieb der Kugelrollspindel gegenüber dem festgeklemmten Schlitten verfahrbar ist. Wenn der gegenseitige Bewegungsbereich beider Schlitten ausgeschöpft ist, wird der vorher bewegte Schlitten gegenüber dem Maschinenbett festgeklemmt, so daß der dann freigegebene Schlitten verfahren werden kann. Auf diese Weise lassen sich im Wechselschrittverfahren größere Entfernungen auf dem Maschinenbett in verhältnismäßig kurzer Zeit überbrücken. Eine entsprechende Kombination von Spannstockträger und Spindelstock ist auf der anderen Maschinenbetthälfte angeordnet, die nicht dargestellt ist. Diese Einheit steht dann spiegelbildlich zu der in Fig. 1 dargestellten Einheit.

Bei der abgeänderten Ausführungsform nach Fig. 2 ist ein Spannstockträger 13 mit Spannstock 14 auf einem Maschinenbett 15 verschiebbar geführt und weist an seinen Enden jeweils ein Führungspratzenpaar 16 und 17 auf, die mit den Prismenführungen des Maschinenbettes 15 zusammenwirken. Zwischen den Führungspratzen 16 und 17 ist der Spannstockträger 13 verjüngt, so daß in diesem Bereich ein Führungsstelzenpaar 18 eines Spindelstockes 19 seitlich an dem Spannstockträger 13 vorbeigeführt werden kann, um mit der Prismenführung des Maschinenbettes 15 zusammenzuwirken. Die Führungsstelzen 18 stehen dabei auf der gleichen Führung wie die Führungspratzen 16 und 17. Der Spindelstock 19 weist noch ein weiteres Führungsstelzenpaar 20 auf, das sich außerhalb des Spannstockträgers 13 auf den Prismenführungen des Maschinenbettes 15 abstützt.

An dem Führungsstelzenpaar 20 des Spindelstockes 19 ist eine Antriebseinheit 21 mit Gleichstrommotor 22 und Getriebe 23 vorgesehen, durch welche eine Kugelrollspindel 24 antreibbar ist, die in eine Mutter 25 eingreift, die mit dem Spannstockträger 13 fest verbunden ist. Klemmeinrichtungen 26 und 27 am unteren Schlitten, d. h. am Spannstockträger 13 bzw. am oberen Schlitten, d. h. am Spindelstock 19, wirken mit dem Maschinenbett 15 zusammen, um die beiden Schlitten wechselseitig in hydraulischer Weise gegenüber dem Maschinenbett 15 festklemmen zu können, wodurch in gleicher Weise wie bei der Ausführungsform nach Fig. 1 die beiden Schlitten im Wechselschrittverfahren verschoben werden können.

**Ansprüche**

1. Abläng- und Zentriermaschine mit zwei verfahrbaren Spindelstöcken (5 ; 19) und zwei verfahrbaren Spannstockträgern (2 ; 13), von denen jeweils ein Spindelstock und ein Spannstockträger einer Maschinenbettseite bzw. Maschinenbetthälfte (1) zugeordnet ist, dadurch gekennzeichnet, daß jeweils ein Spindelstock (5 ; 19) und ein Spannstockträger (2 ; 13) durch eine einzige, gemeinsame Antriebseinheit (9 ; 21) verfahrbar sind, wobei eines (7 ; 22 bis 24) der relativ zueinander beweglichen Teile der Antriebseinheit (9 ; 21) am Spindelstock (5 ; 19) und das andere Teil (8 ; 10 ; 25) am Spannstockträger (2 ; 13) befestigt ist und beim Verfahren des Spindelstockes (5 ; 19) der Spannstockträger (2 ; 13) gegenüber dem Maschinenbett (1 ; 15) mittels einer Feststelleinrichtung (12 ; 26) festgeklemmt ist und beim Verfahren des Spannstockträgers (2 ; 13) der Spindelstock (5 ; 19) gegenüber dem Maschinenbett (1 ; 15) mittels einer weiteren Feststelleinrichtung (11 ; 27) festgeklemmt ist.

2. Abläng- und Zentriermaschine nach Anspruch 1, dadurch gekennzeichnet, daß der Spannstockträger (2) als Schlitten auf dem Maschinenbett (1) verfahrbar ist und eine Schlittenführung (4) für den als Schlitten auf dem Spannstockträger (2) verfahrbaren Spindelstock (5) aufweist.

3. Abläng- und Zentriermaschine nach Anspruch 1, dadurch gekennzeichnet, daß der Spannstockträger (13) und der Spindelstock (19) auf dem gleichen Maschinenbett (15) geführt sind, wobei der Spindelstock mittels Stelzen (18, 20) auf dem Maschinenbett (15) geführt ist und den Spannstockträger (13) teilweise übergreift.

4. Abläng- und Zentriermaschine nach einem der Ansprüche 1 bis 3, dadurch gekennzeichnet, daß die Antriebseinheit einen Gleichstromgetriebemotor (10 ; 22) mit einer Kugelrollspindel (8 ; 24) umfaßt.

5. Abläng- und Zentriermaschine nach einem der Ansprüche 1 bis 4, dadurch gekennzeichnet, daß die Steuerung des Gleichstromgetriebemotors (10 ; 22) und der Klemmvorrichtungen (11 ; 12 ; 26 ; 27) zum Festklemmen der Schlitten (2 ; 5 ; 13 ; 19) gegenüber dem Maschinenbett (1 ; 15) durch eine Mikroprozessorsteuerung erfolgt.

## Claims

1. A cutting off and centering machine with two movable headstocks (5 ; 19) and two movable clamping device holders (2 ; 13), of which one headstock and one clamping device holder is associated with each side or half of the machine bed, characterized in that one headstock (5 ; 19) and one clamping device holder (2 ; 13) are movable by a single common driving unit (9 ; 21) one (7 ; 22 to 24) of the parts of the driving unit relatively movable towards each other being fixed to the headstock (5 ; 19) and the other part (8 ; 10 ; 25) being fixed to the clamping device holder and during movement of the headstock (5 ; 19) the clamping device holder (2 ; 13) being fixedly clamped with reference to the machine bed (1 ; 15) by means of an immobilization device (12 ; 26) and, during movement of the clamping device holder (2 ; 13), the headstock (5 ; 19) being fixedly clamped with reference to the machine bed (1 ; 15) by means of an additional immobilization device (11 ; 27).

2. A cutting off and centering machine according to claim 1, characterized in that the clamping device holder (2) is a carriage which is movable along the machine bed (1) and comprises a carriage guide (4) for the headstock (5) which latter constitutes a carriage that is movable along the clamping device holder (2).

3. A cutting of and centering machine according to claim 1, characterized in that the clamping device holder (13) and the headstock (19) are guided by the same machine bed (15), the headstock being guided on the machine bed (15) by way of stilts (18 ; 20) and partially overlapping the clamping device holder (13).

4. A cutting off and centering machine according to one of claims 1 to 3, characterized in that the driving unit comprises a direct current gear motor (10 ; 22) with a ball threaded feed screw (8 ; 24).

5. A cutting off and centering machine according to one of claims 1 to 4, characterized in that regulation of the direct current gear motor (10 ; 22) and tensioning devices (11 ; 12 ; 26 ; 27) for the purpose of clamping the carriages (2 ; 5 ; 13 ; 19) with reference to the machine bed (1 ; 15) is effected by a microprocessor control.

## Revendications

1. Machine de mise à longueur et de centrage comprenant deux poupées porte-outil mobiles (5 ; 19) et deux supports de bloc de serrage mobiles (2 ; 13), une poupée et un support de serrage étant conjugués à chaque côté ou chaque moitié du banc (1 ; 15) de la machine, caractérisée en ce que la poupée (5 ; 19) et le support de serrage (2 ; 13) de chaque moitié de banc sont déplaçables par une seule unité d'entraînement commune (9 ; 21), l'une (7 ; 22 à 24) des deux parties mobiles l'une par rapport à l'autre de l'unité d'entraînement (9 ; 21) étant fixée à la poupée (5 ; 19) et l'autre partie (8 ; 10 ; 25) étant fixée au support de serrage (2 ; 13), et que le support de serrage (2 ; 13) est bloqué par rapport au banc (1 ; 15) au moyen d'un dispositif d'immobilisation (12 ; 26) pendant le déplacement de la poupée (5 ; 19), tandis que la poupée (5 ; 19) est bloquée par rapport au banc (1 ; 15) au moyen d'un second dispositif d'immobilisation (11 ; 27) pendant le déplacement du support de serrage (2 ; 13).

2. Machine selon la revendication 1, caractérisée en ce que le support de serrage (2) est réalisé comme un chariot disposé coulissant sur le banc (1) de la machine et est pourvu de glissières (4) pour une poupée (5) réalisée également sous forme d'un chariot et disposée coulissante sur le support de serrage (2).

3. Machine selon la revendication 1, caractérisée en ce que le support de serrage (13) et la poupée (19) sont guidés sur le même banc de machine (15), la poupée étant guidée sur ce banc par des pieds (18 ; 20) et recouvrant le support de serrage (13) en partie.

4. Machine selon l'une quelconque des revendications 1 à 3, caractérisée en ce que l'unité d'entraînement comporte un motoréducteur à courant continu (10 ; 22) et une vis mère constituée par une broche filetée à billes (8 ; 24).

5. Machine selon l'une quelconque des revendications 1 à 4, caractérisée en ce que la commande du motoréducteur à courant continu (10 ; 22) et des dispositifs de serrage (11 ; 12 ; 26 ; 27) pour bloquer les chariots (2 ; 5 ; 13 ; 19) par rapport au banc (1 ; 15) de la machine est une commande à microprocesseur.

Fig.2